(19) Europäisches Patentamt

European Patent Office

Office européen des brevets

(11) **EP 4 545 782 B1**

(12) **EUROPEAN PATENT SPECIFICATION**

(45) Date of publication and mention
of the grant of the patent:
**24.06.2026 Bulletin 2026/26**

(21) Application number: **23206332.1**

(22) Date of filing: **27.10.2023**

(51) International Patent Classification (IPC):
**F03D 1/02** *(2006.01)* **F03D 1/04** *(2006.01)*

(52) Cooperative Patent Classification (CPC):
**F03D 1/041; F03D 1/02; F03D 1/046; F03D 1/051**

(54) **A WIND TURBINE**

WINDTURBINE

ÉOLIENNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**30.04.2025 Bulletin 2025/18**

(73) Proprietor: **Sifrer CRB d.o.o.
1000 Ljubljana (SI)**

(72) Inventor: **Sifrer, Lucijan
1000 Ljubljana (SI)**

(74) Representative: **Patentni Biro AF d.o.o.
Kotnikova 32, p.p. 2706
1001 Ljubljana (SI)**

(56) References cited:
**DE-B4- 102011 016 141    NL-B1- 2 015 290
US-A1- 2020 248 673**

## Description

### Field of the invention

The invention belongs to the field of wind motors, more precisely to the field of wind motors with rotation axis substantially parallel to the air flow entering the rotor and to the field of wind motors specially adapted for installation in particular locations. The present invention relates to a wind turbine, as well as to a vessel, an offshore or an onshore power plant with at least one said turbine.

### Background of the invention and the technical problem

A wind turbine is a device that converts kinetic energy of wind into electrical energy. Wind turbines can rotate about their vertical axis or more commonly about their horizontal axis. They can also comprise blades or be bladeless, depending on the construction of the turbine. Conventional, well-known bladed horizontal axis turbines comprise the following main components:

- a rotor comprising the blades for converting wind energy to low-speed rotational energy,
- a generator comprising an electrical generator, control electronics, and usually a gearbox with a brake, adjustable-speed drive, or continuously variable transmission component for converting the low-speed incoming rotation to high-speed rotation suitable for generating electricity, as well as
- a supporting structure, such as a tower.

These wind turbines require sufficient space for installation and in case of larger wind turbine fields significant effort has to be put in to find suitable placement according to the weather (wind) characteristics and populated areas. In order to address these problems, offshore wind farms located at sea have been established. In addition to having less impact on people and the landscape, these farms also generate more electricity due to higher and constant wind speeds.

Due to the significant transport on sea, transport vessels could be used for energy generation, wherein many vessels, such as transport ships, are available for installation of energy-generating systems, such as wind turbines and/or photovoltaics. However, the currently known turbines are too bulky, with low effectiveness and require alternative constructional solutions to be suitable for placement on vessels. Therefore, the invention aims to provide a wind turbine, preferably modular, suitable for installation of vessels and/or other places by decreasing their size. An additional technical problem particularly connected to the preferred modular design is also a constructional design of individual modules that allow energy generation by the said modular wind turbine. In addition, in case the invention is adapted for installation of vessels, the aim of the solution is minimum impact on the vessel or its structure.

### Prior art

Patent EP3472462 relates to a wind turbine comprising a tower; a drive train which has a rotor, a rotor bearing, preferably a transmission, and a generator; a cylinder, the longitudinal axis of which extends transversely to the longitudinal axis of the tower and which receives some sections of the drive train on one side; and a dome which closes the other side of the cylinder. According to this document the drive train has means for conducting cooling air between the drive train end face opposite the rotor and the lateral surface of the drive train, the cylinder receives an inner cylinder which separates the interior of the cylinder into an outer cylinder intermediate space and an inner cylinder interior, and the dome is designed as an air/air heat exchanger, wherein the inner cylinder is communicatively connected to the drive train end face opposite the rotor and the dome, thereby forming a closed cooling circuit. This solution has a feedback loop; however, it is designed to ensure cooling with heat recuperation, which differs from the present invention.

Patent application US2022065225 describes a modular wind turbine system and a method of use thereof, wherein the system comprises: a mounting frame; a fixed toroidal support structure attached to the mounting frame, the toroidal support structure having a concave portion and a convex portion; a wind turbine located proximal to the concave portion of the toroidal support structure, wherein the wind turbine travels about at least a portion of the concave portion of the toroidal support structure; and a first baffle, wherein the first baffle extends about the portion of the concave portion of the toroidal support structure about which the first turbine travels, wherein the baffle surrounds a portion of the wind turbine opposite the fixed toroidal support structure, and wherein the baffle includes at least one component selectively variably adjustable so as to vary the force, direction, or disruption of flow of fluid thereby, relative to the wind turbine. The modularity of this solution differs from the present invention.

Patent application CA3104301 discloses a modular wind turbine, but with significantly different modules. This document describes a solution that comprises one or more modules, each exploiting the aerodynamic effects of complementary, non-rotating, aerodynamic air foil profiles to passively create zones of high- and low-air pressure and generate localized wind speeds in excess of the ambient wind speed from which mechanical energy can be harvested.

Patent application WO2023057025 discloses a vertical-axis wind turbine constructed of multiple modular sections having a front area operable to receive ambient wind, a back area, a bottom, a top area adapted to be fastened to adjacent, preferably identical, modular sections, and side areas with one or more openings operable to expel excess wind from each modular section. Each modular section comprises one or more vertical-axis wind rotors each comprising at least one wind blade. The one or more wind rotors being connected and fixed to wind rotors of adjacent modular sections. Additionally, each modular section comprises at least two wind guiding members for each of the one or more wind rotors adapted to capture and guide ambient wind to each of the one or more wind rotors.

Document ES2254037 describes a modular wind turbine for power generation, which is built from linear groups of modules coaxially united together, each module consisting of separate wind turbine. The modules differ from the present invention, particularly in the shape of the parts influencing the air flow, such as the air tube, as well as air intake and air outtake nozzles.

Patent application WO2018029401 relates to a wind turbine having a modular overall design consisting of at least one independent, autonomous and stackable module. Each module has, internally, a horizontal axis of rotation, which is oriented perpendicular to the axis of the wind, bearing on one hand peripheral fins sandwiched between two main rotor disks, and on the other hand at each of its ends and auxiliary rotor, the main rotor disks and the auxiliary rotors rotating respectively inside fixed stators, thus forming a plurality of electrical generators producing the electrical energy returned by the structure of the module. Energy production is regulated by acting on the magnetic field of each one of the internal electric generators. Each module has an air inlet, preferably covered by a visor, and all the means for operation, for regulation and for visualization as well as means for connection to the structure of the module or a next module. The shape of the modules differs from the present invention.

Further relevant background prior art is disclosed in NL 2 015 290 B1 and DE 10 2011 016141 B4.

**Description of the solution to the technical problem**

The invention addresses the disadvantages of known solutions and provides a wind turbine compact enough to be installed on vessels or any other object exposed to wind, or as offshore and/or onshore turbines. In order to allow installation on vessels and similar objects such as offshore and on shore wind turbines, compact size has to be ensured, which is achieved by adjusting the diameter of the turbine module, the dimensions of blades and number of turbine modules. Namely, size and power of wind turbines are derived from the power equation:

$$*P = 0.5 \times \rho \times V^3 \times \P \times R^2, \quad \text{(equation 1)}$$

wherein $\rho$ [kg/m3] is air density equal to 1.225 kg/m³ at a pressure of 1013.25 hPa and a temperature of 15 °C; V [m/s] is wind (air) speed, R [m] is rotor blade radius, and is a mathematical constant 3.141.

The current dynamics in dimensioning or increasing the power of wind turbines follow the concept of increasing the diameter of the rotor blades, which means that a larger rotational area of the rotor blades, which in turn means more power. The average diameter of the rotor blades of a 5 MW standard wind turbine is 126 m, and that of a 2 MW standard turbine is 80 m. The invention, however, allows decreased rotor blade radius due to increase of the wind speed. According to the equation namely, increase in the speed and amount of air flow through the rotor blades reduces blade diameter. With a one-time increase in wind speed, the size of the rotor blades is reduced by a factor three.

The technical problem is solved as defined in independent claims, where in preferred embodiments are defined in dependent claims.

The essence of the invention is that the wind turbine comprises:

- an air intake nozzle allowing entry of air into the turbine and flow of the air towards rotor blades,
- a hollow air tube on which rotor blades of the wind turbine are installed, said hollow air tube being placed between the air intake nozzle and air outtake nozzle, and
- the air outtake nozzle allowing at least partial release of air to the exterior of the wind turbine as well as at least partial return of the air via the hollow air tube towards the intake nozzle.

The air travels from the intake nozzle towards the outtake nozzle through the rotor blades, wherein at least a part of the air flow is returned to the intake nozzle through the hollow air tube. For this purpose, the outtake nozzle is provided with at least one surface arranged to deflect at least a part of the air flow towards the hollow air tube. In addition, or as an alternative, the air intake nozzle is preferably provided with at least one surface arranged to deflect at least a part of the air from the hollow air tube towards the rotor blades. The hollow air tube thus allows that air entering the wind turbine is returned in a feedback loop, which in addition to newly incoming air ensures higher flows and speeds that enable decrease of wind turbine dimensions as described above.

In a most preferred embodiment, the construction of the wind turbine is modular, and the construction of individual modules further affects the air flow, the speed of which is further increased, so that the dimensions of the wind turbine may be smaller in agreement with the equation shown above. The preferred embodiment of the wind turbine modules are a first module functioning as air intake nozzle, a second module representing the middle part of the turbine, wherein an arbitrary number of second modules can be used, and a third module functioning as air outtake nozzle, as described below.

The modular wind turbine with the above-mentioned modules according to a preferred embodiment comprises at least:

- a supporting structure, preferably comprising a yaw system comprising a yaw drive, wherein the supporting structure is arranged to support the modules forming the modular wind turbine, and wherein the supporting structure may further comprise a telescopic or a rigid arm to allow installation on vessels or similar objects,
- a first module shaped as an air intake nozzle comprising an outer ring, a cone and a front air loop, preferably for ensuring direction of an air flow and simultaneously compressing air for increasing air speed,
- a third module shaped as an air takeout nozzle comprising an outer housing, a cover and a back air loop, said air out take nozzle being arranged for ensuring that at least part of the air flow is deflected towards the air intake nozzle, wherein said deflected air flows create feedback loop increasing air flow through the rotor blades of at least one turbine module, and
- at least one second module installed between the first and the third module, i.e. the air intake nozzle and the air outtake nozzle, each second module comprising at least:

  o an outer housing, wherein said outer housing is shaped as a truncated cone and the diameter on its front side closer to the intake nozzle is larger than the diameter on its end side closer to the outtake nozzle, and wherein the outer housing is preferably provided with installed fixed ribs that are mounted along the housing or only around the interior circumference at the entrance for directing the air flow, and wherein said ribs are preferably installed between an end part of the previous outer housing and a front part of the adjacent outer housing and uniformly distributed along the entire circumference of the outer housing, the ribs being preferably shaped as plates installed perpendicularly or at any angle with regards to the outer housing to allow creation of a plurality of entries for side air intake,
  ∘ a hollow air tube provided inside the outer housing, wherein said air tube is arranged for allowing reverse air flow from the air outtake nozzle towards the air intake nozzle, and wherein the interior of the hollow air tube is preferably provided with fixed spiral ribs, which are mounted around the inner circumference to direct and swirl the air, wherein the spiral ribs have a height at least 0.05 m,
  ∘ at least three rotor blades, preferably up to ten rotor blades, installed on a holder that is rotatably mounted on the hollow air tube,
  ∘ a support base shaped as a curved plate to correspond to the outer housing of the module, wherein said support base allows attachment of the module to the supporting structure,
  ∘ a generator arranged for converting the kinetic energy of the wind flowing through the wind turbine into electrical energy, wherein said generator is attached to the hollow body with attachments, and wherein said generator is preferably equipped with a brake to stop rotation of the generator rotor blades in manners known to the person skilled in the art, wherein the preferred use of the brake is in case of device maintenance or in the case of full batteries.

The air intake nozzle, the air outtake nozzle and at least one turbine module are mutually attached, preferably screwed, in at least three points on the outer housing, which increase the stiffness of the entire modular wind turbine.

The increase of the speed and amount of air flow through the wind turbine according to the invention is ensured by positive and negative pressures ensured by the air intake nozzle and the air outtake nozzle, side air intake enabled by the shape of outer housings and preferred ribs provided on the interior of said outer housings and the return air loop ensured by the air intake nozzle and the air outtake nozzle provided with front and back air loops. In addition, the interior of the hollow air tube may be provided with spiral ribs with height at least 0.05 m, preferably around 0.2 m, which run along the entire length of the air tube to direct and swirl the air. The fixed ribs that are mounted around the interior circumference or throughout the interior of outer housings are arranged for directing side air intake flow and strengthening the construction.

Thus, the radius of the rotor blades is at least 0.5 m, preferably around 2.5 to 3 m, wherein the diameter of the hollow air tube is at least 0.2 m.

The wind turbine according to the invention may be connected to a battery storage unit in case of installation on vessels or to any transformer station near to the wind turbine in case the turbine is installed at sea and land as on-shore or off-shore plants. At least one battery storage unit is connected to an electric motor which is connected to the ship's drive shaft via a clutch. These connections are achieved in known manners.

The preferred use of the invention is in the commercial shipping industry and pleasure yacht industry, where the consumption of fossil fuels for diesel engine drives and the resulting carbon foot prints are the largest. This electrical energy generation system enables easy and low-cost installation on all types and sizes of vessels with minimal interventions on the existing vessel structure. The system also does not interfere with the working process of the vessel. It can be used as a primary or a secondary drive system with a normal fuel consumption saving up to 7 to 50%. The electrical energy stored in the batteries is used to drive the vessel's propellers via electric motors. The efficiency of the system primarily depends on the ships' waterways and is fully automated, which means that it works on the basis of sensors, probes and weather forecasts. The system is functional in the all phases: sailing, anchoring, loading and unloading the vessel. The wind turbine according to the invention installed on transport vessels travelling on the sea can thus decrease the need for fossil fuels, reduce the carbon foot print and ensure sufficient energy for the operation of the vessel. It is important to note that the wind turbine according to the invention are operable 24/7, including the time when the vessel is parked. The surplus of the generated electric energy is stored in batteries, which is a significant improvement over known rigs or sails. In addition, the invention is also suitable for the implementation of wind power plants at sea or on land.

**Brief description of the drawings**

The invention will be described in further detail based on exemplary embodiments and figures, which show:

Figure 1　　Front view of the wind turbine according to a possible embodiment

Figure 2　　Side view of the wind turbine shown in figure 1

Figure 3　　Top view of the r wind turbine shown in figures 1 and 2

Figure 4　　Back view of the r wind turbine shown in figures 1, 2 and 3

Figure 5a　　A 3D explosion model with main components of the wind turbine according to the embodiment shown in figures 1 to 4

Figure 5b　　Front air loop

Figure 5c　　Back air loop

Figure 6　　Air flow through the wind turbine shown in figures 1 to 5, wherein the outer housings of modules are not shown in order to show air flow inside said housings

Figure 7　　Air flow through the wind turbine shown in figures 1 to 5, wherein the outer housings of modules are shown and air flow between said outer housings is shown with arrows

Figure 8　　Schematic diagram of the connection to an existing vessel drive system

Figure 9　　Possible embodiments of vessels provided with at least 1 modular wind turbine, wherein Figure 9a shows a container ship with a plurality of modular wind turbines, Figure 9b shows an oil tanker with a plurality of modular wind turbines, Figure 9c shows a passenger shop with a plurality of modular wind turbines and Figure 9d shows a leisure boat provided with one modular wind turbine

Figure 10　　A possible installation of the modular wind turbine as an offshore or onshore power plant, i.e. as a multi-turbine plant

**Detailed description of the solution to the technical problem**

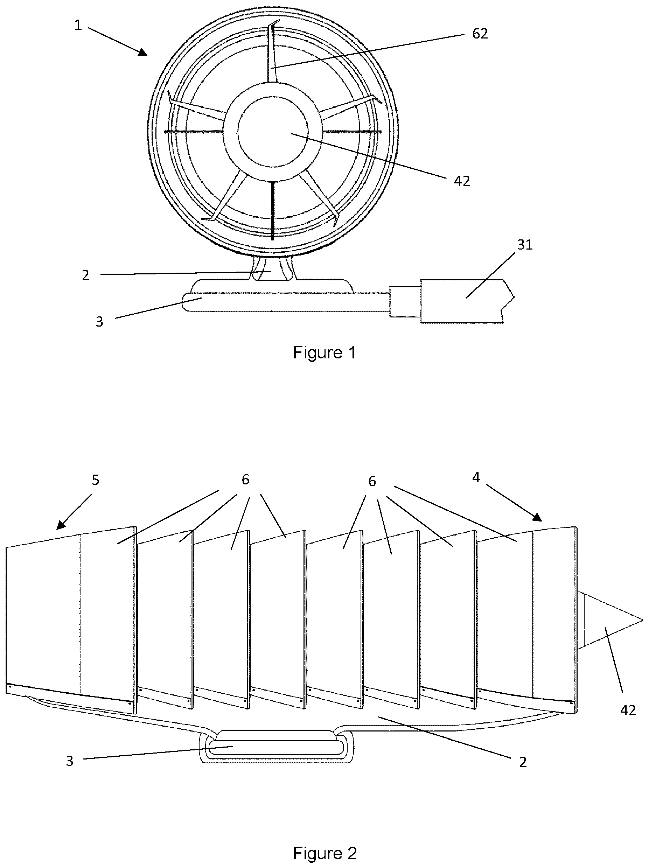

A possible embodiment of the wind turbine according to the invention is shown in figures 1 to 7, wherein the wind turbine comprises:

- a supporting structure 2 with a yaw system 3 and a yaw drive and also an optional telescopic arm 31, wherein the supporting structure 2 is arranged to support the modules 6 forming the modular wind turbine 1,

- a first module shaped as an air intake nozzle 4 comprising an outer ring 41, a cone 42 and a front air loop 43, preferably for ensuring direction of an air flow and simultaneously compressing air for increasing air speed

- a third module shaped as an air takeout nozzle 5 comprising an outer ring 51, a cover 52 and a back air loop 53, said air out take nozzle 5 being arranged for ensuring that at least part of the air flow is deflected towards the air intake nozzle 4, wherein said deflected air flows create feedback loop increasing air flow through rotor blades of at least one second turbine module 6, and

- at least one, preferably more second modules 6 installed between the first and the third module, i.e. the air intake nozzle and the air outtake nozzle 4, 5, each second module 6 comprising at least:

　　∘ an outer housing 61, wherein said outer housing 61 is shaped as a truncated cone and the diameter on its front side closer to the intake nozzle 4 is larger than the diameter on its end side closer to the outtake nozzle 5, and wherein the outer housing 61 is preferably provided with fixed ribs that are mounted around the interior circumference at the entrance for directing the air flow,

　　o a hollow air tube 63 provided inside the outer housing 61, wherein said air tube 63 is arranged for allowing reverse air flow from the air outtake nozzle 5 towards the air intake nozzle 4, and wherein the interior of the hollow air tube 63 is preferably provided with fixed spiral ribs, which are mounted around the inner circumference to direct and swirl the air,

　　∘ at least three rotor blades 62, preferably up to ten rotor blades, installed on a holder that is rotatably mounted on the hollow air tube 63,

　　∘ a support base 64 shaped as a curved plate to correspond to the outer housing 61 of the module, wherein said support base 64 allows attachment of the module 6 to the supporting structure 2,

　　∘ a generator G arranged for converting the kinetic energy of the wind flowing through the turbine into electrical energy, wherein said generator is attached to the hollow air tube 63 with attachments G1, and wherein said generator G is preferably equipped with a brake to stop rotation of the generator rotor blades in manners known to the person skilled in the art, wherein the preferred use of the brake is in case of device maintenance.

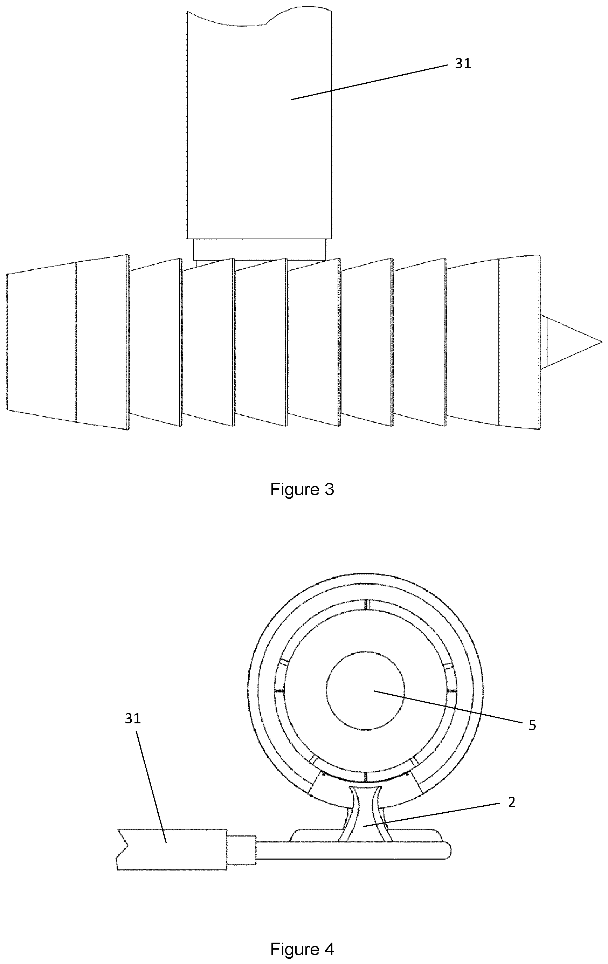

Figure 1 shows the front of the wind turbine 1, wherein inside the intake nozzle 4 is visible in the centre, the rotor blades 62 of the second module 6 are projecting from the hollow air tube 63, which is covered by the intake nozzle 4. The whole structure is mounted on the support structure 2. Figure 2 shows the side view of the wind turbine 1, wherein eight second modules 6 are installed between the intake nozzle 4 and the outtake nozzle 5. The supporting structure 2 is shaped as a serrated holder to correspond to the shapes of the outer housings 61 of modules 6. Figure 3 shows the top view of the modular wind turbine 1, wherein the telescopic arm 31 is shown. Said telescopic arm 31 enables additional adjustment of the position of the modular wind turbine 1. The telescopic arm 31, however, is not essential, and the position of the modular wind turbine 1 can be adjusted in various ways. Figure 4 shows the back view, wherein the air outtake nozzle 5 is visible in the centre of the outer housing. The end part of the support structure 2 is also visible.

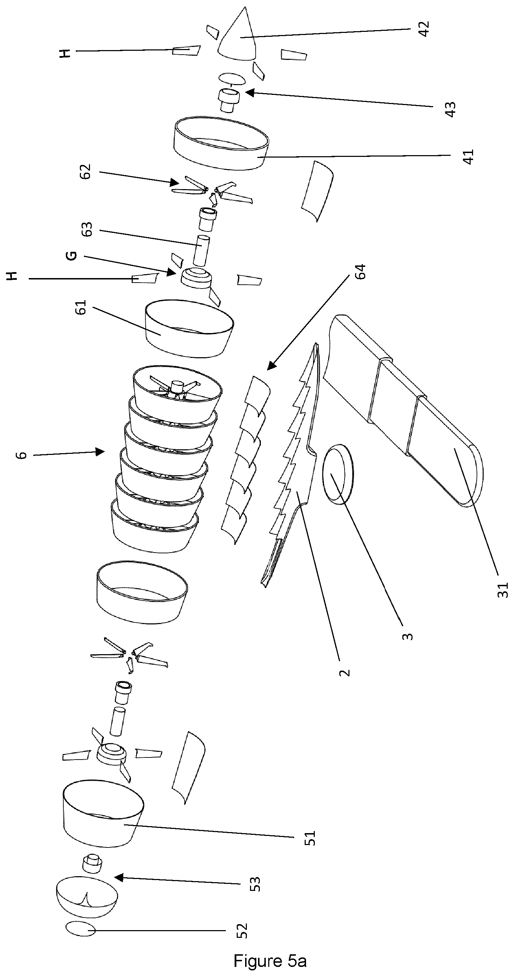

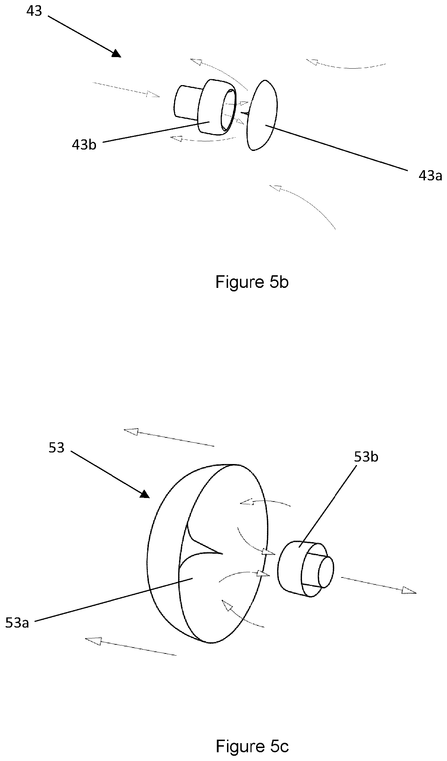

Figure 5a is an explosion 3D view of the possible embodiment with eight second modules 6 and the components will be described in further detail below.

The air intake nozzle 4 is designed as an outer ring 41 in which a cone 42 and front air loop 43 are inserted. The outer ring 441 is preferably shaped as a truncated cone, with a diameter on one end smaller than the diameter on the other end. The preferred inclination of the outer ring 41 ranges from 1 to 20 degrees. The function of the outer ring 41 is ensuring direction of an air flow through the rotor blades 62.

The function of the cone 42 is to ensuring direction of fan air flow and simultaneously compressing air for increasing air speed. The diameter of the cone 42 is from 30% to 80% of the diameter of the outer ring 41. The length of the cone 42 is equal to one to two times the diameter of the cone 42.

The front air loop 43 comprises two separate parts, wherein one is a convex element 43a with spherical spike in the centre to be installed on the screw-like body 43b. The diameter of front air loop 43 is equal or smaller the diameter of the cone 42. The screw-like body 43b is hollow so that air coming from the hollow air tube 63 can travel through the screw-like body 43b towards the convex element 43a, which deflects the air in the direction of the rotor blades 62 of second modules 6. The convex element 43a is arranged to be installed in the interior of the cone 42 so that the air from the hollow air tube 62 and the hollow screw-like body 43b is channelled and dispersed towards the rotor blades 62. The function of the front air loop 43 is thus ensuring that air from the return loop travelling through the hollow air tube 63 is directed towards the rotor blades 62.

The air outtake nozzle 5 is designed as an outer ring 51 in which a back cover 52 and a back air loop 53 are installed. The outer ring 51 is preferably shaped as a truncated cone, with a diameter on one end smaller than the diameter on the other end. The preferred inclination of the outer ring 51 ranges from 1 to 20 degrees. The function of the outer ring 51 is ensuring direction of an air flow through the rotor blades 62 as well as the returning air from hollow air tube 63 deflected by the front air loop 43 and simultaneously compressing air for increasing air speed at the air outtake nozzle 5. The back cover 52 is round in shape. The diameter of the back cover 52 is from 30% to 90% of the diameter of the back air loop 53. The function of back cover 52 is only visual and does not affect the operation of the device.

The back air loop 53 comprises two elements, wherein a larger convex element 53a with spherical spike in the centre is provided with an attachment for a smaller hollow screw-shaped 53b element to channel and compress intake air to the smaller hollow element to which the air tube 63 is fixed. The diameter of back air loop 53 is from 30% to 90% of the diameter of the outside ring 51. The function of the back air loop 53 is to ensuring that part of the air flow from the inner side of the outside rings is directed to the hollow air tube 63 and consequently through the front air loop 43 to the rotor blades 62.

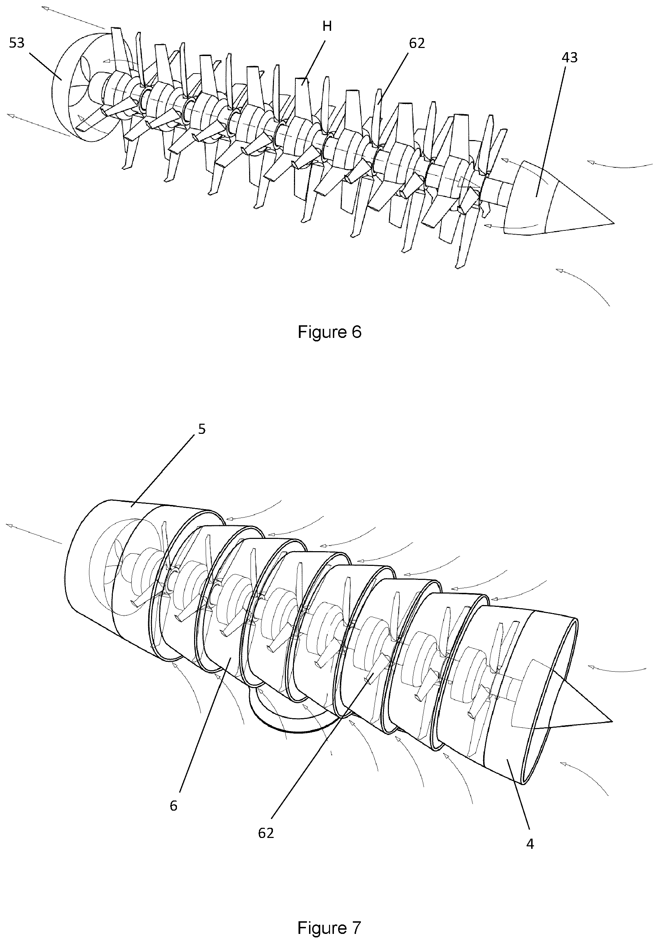

The second (i.e., intermediate) module 6 installed between the air intake 4 and air outtake nozzles 5 is at least one, where in two or more are preferred. The number of modules 6 is adjusted with regards to the planned installation site, expected winds, required power, etc. In most preferred embodiments, the number of modules 6 is from 3 to 12, wherein at least one is provided with a supporting structure 2 that is connected to the yaw drive 3 and the optional telescopic 31 or rigid arm for adjustment of the turbine to the actual wind direction. This is designed in any suitable manner known to the skilled person. The figures show 8 intermediate modules 6, but this is only an exemplary embodiment. The side intake of air is ensured with the truncated outer housings 61, as indicated by arrows in figure 7, wherein the preferred inclination of the outer housing 61 is from 1 to 45 degrees. The side (lateral) air intake increases the amount of incoming air and consequently the speed of air flow, which in turn allows higher power of a wind turbine.

The air tube 63 ensures a part of the air flow is returned to the front air loop 43 and back to the rotor blades 62 as shown in figure 6, which further affects the air flow. The diameter of the air tube 63 is from 3% to 60% of the diameter of the outer housing 61.

The above-mentioned supporting structure 2 of the modular wind turbine comprises at least:

- a longitudinal beam 21 having a bottom part arranged to be installed on the yaw system 3 and an upper part arranged to receive the support bases of the air intake nozzle 4, the air outtake nozzle 5 and at least one second module 6,
- the yaw system 3 comprising the yaw drive to which the longitudinal beam is attached, wherein the yaw drive is provided with a 360-degree rotating bearing, which allows the wind turbine 1 to rotate in any direction according to the wind flow, and
- optionally a telescopic arm 31 or a rigid arm arranged to receive the yaw system 3.

The preferred embodiment of the longitudinal beam 21 is serrated as shown in figure 5a to correspond to the curved support bases 64 of second modules 6.

All electrical wiring and electrical elements are preferably made in a water proof casing and are resistant to UV rays and salt. All built-in materials are preferably fire safety class A1, such as aluminium, stainless steel, copper, carbon fibres and fire-resistant polymers and glass fibres.

The invention is preferably further provided with a built-in physical protection against the entry of birds and other animals into the rotor blade area. Physical protection is preferably made from fine stainless steel wire mesh with a square side sizing at least 3 cm. The wire mesh is attached on the inner side of the outside ring on the intake nozzle.

The invention is designed as a generic and modular system, wherein increasing the number of modules 6 can be easily upgraded for higher-rated powers. Also, modularity enables simpler maintenance and operation of the system in the event of the failure of individual modules 4, 5, 6.

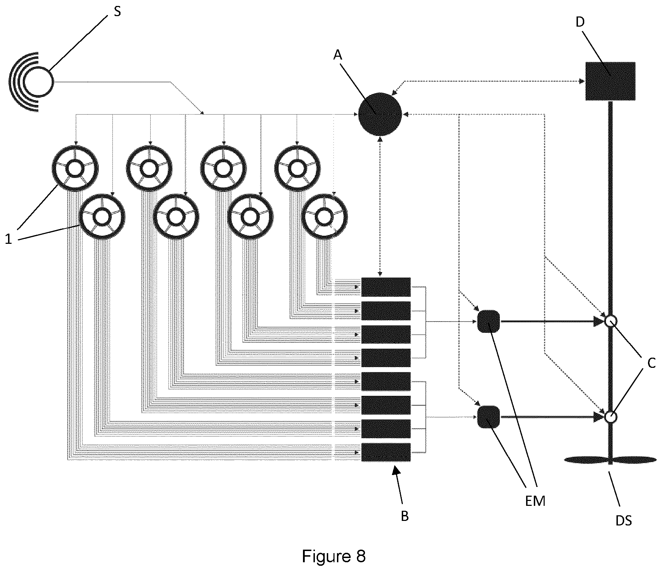

Figure 8 shows a possible connection of the modular wind turbines 1 in case of installation on a vessel. Each turbine 2 is connected to a battery storage B, which is via power cables and electric motors EM in contact with the drive shaft DS with a propeller of the diesel engine D of the vessel, wherein the connection between the electric motors EM is achieved via motor drive shaft and a suitable clutch C. The control centre A of the vessel is arranged to be connected to sensors S for sensing the environmental conditions and to the diesel engine D, which can be suitably controlled based on the power produced by the modular wind turbines installed on the vessel.

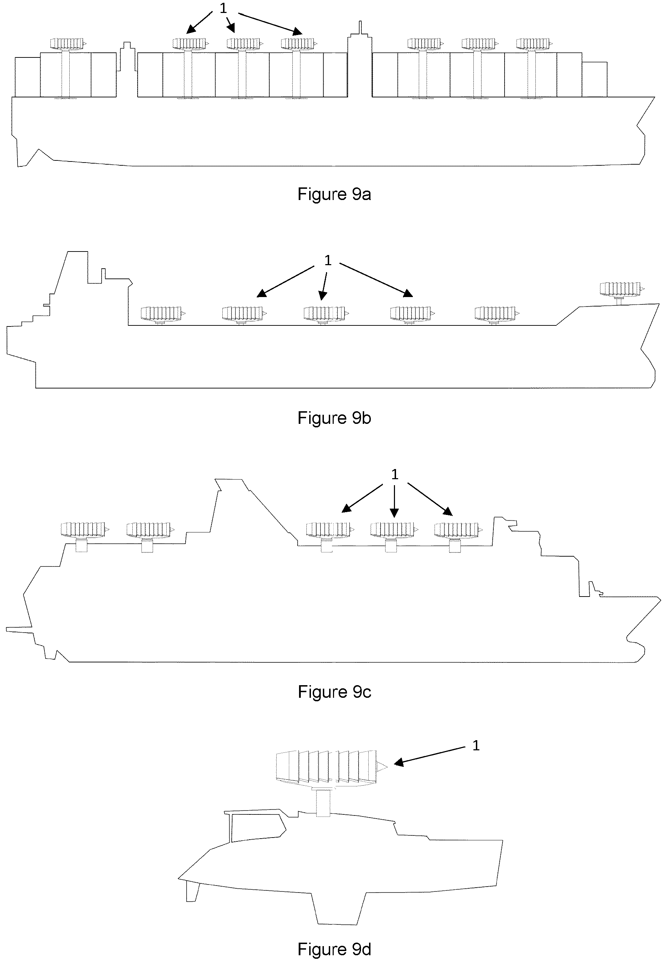

Figures 9a to 9d show various embodiments of vessels with the modular wind turbine as described above. At least one modular wind turbine 1 is installed on the vessel, preferably more depending on the size and needs of the vessel. In some embodiments 10, 20 or even more modular wind turbines may be provided. The wind turbine is installed on the vessel in any suitable manner, preferably via the supporting system with a rigid or telescopic arm. The vessel may be any suitable, wherein Figure 9a shows a container ship, Figure 9b shows an oil tanker and Figure 9c shows a passenger shop, all provided with a plurality of modular wind turbines. Figure 9d shows a leisure boat, which is provided with one modular wind turbine.

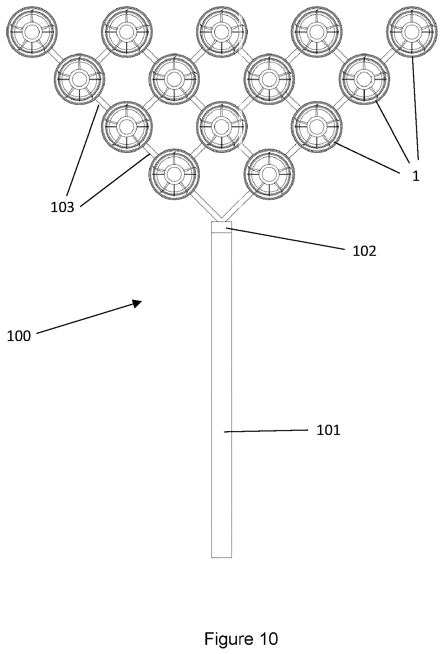

The wind turbine according to the invention can be installed as off shore or onshore power plants, wherein a plurality of turbines is installed in any suitable shape to allow generation of power. Figure 10 shows a possible installation of the wind turbine as an off shore or onshore power plant 100, i.e., as a multi-turbine plant. The structure comprises at least:

- a supporting vertical column 101,
- a plurality of wind turbines 1 according to the invention, wherein said wind turbines 1 are arranged in a shape of an inverted triangle,
- said plurality of wind turbines 1 are connected with beams 103 that are fixed on the central module, which is determined based on the number of second modules, wherein the central module is the one positioned in the centre of the gravity of the turbine modules as a whole, and
- a yaw drive 102 with a 360-degree rotating bearing, which allows the wind turbine and/or the plant to rotate in any direction according to the wind flow.

**Claims**

1. A wind turbine (1) comprising:

   - an air intake nozzle (4) arranged to allow entry of air into the turbine (1) and flow of the air towards rotor blades (62),
   - a hollow air tube (63) on which rotor blades (62) of the wind turbine (1) are installed, said hollow air tube (63) being placed between the air intake nozzle (4) and an air outtake nozzle (5), **characterized in that**
   - the air outtake nozzle (5) arranged to allow at least partial release of air to the exterior of the wind turbine (1) as well as at least partial return of the air via the hollow air tube (64) towards the intake nozzle (4).

2. The wind turbine (1) according to claim 1, wherein the air outtake nozzle (5) is provided with at least one surface arranged to deflect at least a part of the air flow towards the hollow air tube (63), and/or wherein the air intake nozzle (4) is provided with at least one surface arranged to deflect at least a part of the air from the hollow air tube (63) towards the rotor blades (62).

3. The wind turbine (1) according to any of the preceding claims, wherein the interior of the hollow air tube (63) is provided with fixed spiral ribs.

4. The wind turbine (1) according to the preceding claim, wherein the spiral ribs have a height at least 0.05 m.

5. The wind turbine (1) according to any of the preceding claims, said wind turbine (1) being modularly designed and comprising at least:

   - a supporting structure (2) arranged to support the modules (4, 5, 6) forming the modular wind turbine (1),
   - a first module shaped as the air intake nozzle (4) for ensuring direction of an air flow and compressing air for increasing air speed, said air intake nozzle (4) comprising an outer ring (41), a cone (42) and a front air loop (43),
   - a third module shaped as the air takeout nozzle (5) comprising an outer ring (51), a cover (52) and a back air loop (53), said air out take nozzle (5) configured to allow that at least part of the air flow is deflected towards the air intake nozzle (4), wherein said deflected air flows create a feedback loop for increasing air flow through rotor blades (62) of at least one second turbine module (6), and
   - at least one second module (6) installed between the first and the third module (4, 5), each second module (6) comprising at least:

       ○ an outer housing (61), wherein said outer housing (61) is shaped as a truncated cone and the diameter on its front side closer to the intake nozzle (4) is larger than the diameter on its end side closer to the outtake nozzle (5),
       ○ the hollow air tube (63) provided inside the outer housing (61), wherein said air tube (63) is configured to allow reverse air flow from the air outtake nozzle (5) towards the air intake nozzle (4),
       ○ at least three rotor blades (62) installed on a holder that is rotatably mounted on the hollow air tube (63),
       ○ a support base (64) shaped as a curved plate to correspond to the outer housing (61) of the module (6), wherein said support base (64) allows attachment of the module (6) to the supporting structure (2),
       ○ a generator (G) arranged for converting the kinetic energy of the wind flowing through the turbine into electrical energy, wherein said generator is attached to the outer housing with attachments (H).

6. The wind turbine (1) according to claim 5, wherein the air intake nozzle (4), the air outtake nozzle (5) and at least one turbine module (6) are mutually attached, preferably screwed, in at least three points on the outer housing (61), which increase the stiffness of the entire modular wind turbine (1).

7. The wind turbine (1) according to any claim from 5 to 6, wherein the outer housing (61) is provided with installed fixed ribs.

8. The wind turbine (1) according to the preceding claim, wherein said ribs are installed between an end part of the previous outer housing (61) and a front part of the adjacent outer housing (61).

9. The wind turbine (1) according to any claim from 5 or 8, wherein the fixed ribs are uniformly distributed along the entire circumference of the outer housing (61).

10. The wind turbine (1) according to any claim from 5 to 9, wherein the fixed ribs are shaped as plates installed perpendicularly or at any angle with regards to the outer housing (61) to allow creation of a plurality of entries for side air intake.

11. The wind turbine (1) according to any of the preceding claims, wherein the radius of the rotor blades (62) is at least 0.5 m, and wherein the diameter of the air tube (63) is at least 0,2 m.

12. The modular wind turbine (1) according to any of the preceding claims, wherein the supporting structure (2) further comprises a telescopic (31) or a rigid arm.

13. The wind turbine (1) according to any of the preceding claims, wherein the turbine is connected to a battery storage unit (B) in case of installation on vessels or to any transformer station near to the wind turbine (1) in case the turbine (1) is installed at sea and land as on-shore or off-shore plants.

14. A vessel provided with at least one, preferably more, wind turbine (1) according to any of the preceding claims.

15. An off shore or onshore power plant, comprising:

    - a plurality of modular wind turbines (1) according to any of the preceding claims from 1 to 14.

**Patentansprüche**

1. Eine Windturbine (1), die Folgendes umfasst:

    - eine Lufteinlassdüse (4), die angeordnet ist, um den Eintritt von Luft in die Turbine (1) und den Luftstrom in Richtung der Rotorblätter (62) zu ermöglichen.
    - ein hohles Luftrohr (63), auf dem die Rotorblätter (62) der Windturbine (1) angebracht sind, wobei sich das hohle Luftrohr (63) zwischen der Lufteinlassdüse (4) und einer Luftauslassdüse (5) befindet, **dadurch gekennzeichnet, dass**
- die Luftauslassdüse (5) angeordnet ist, um sowohl einen zumindest teilweisen Austritt von Luft zu der Außenseite der Windturbine (1) als auch einen zumindest teilweisen Rückfluss der Luft über das hohle Luftrohr (64) in Richtung der Einlassdüse (4) zu ermöglichen.

2. Die Windturbine (1) nach Anspruch 1, wobei die Luftauslassdüse (5) mit mindestens einer Oberfläche versehen ist, die angeordnet ist, um mindestens einen Teil des Luftstroms in Richtung des hohlen Luftrohrs (63) abzulenken, und/oder wobei die Lufteinlassdüse (4) mit mindestens einer Oberfläche versehen ist, die angeordnet ist, um mindestens einen Teil der Luft aus dem hohlen Luftrohr (63) in Richtung der Rotorblätter (62) abzulenken.

3. Die Windturbine (1) nach einem der vorstehenden Ansprüche, wobei das Innere des hohlen Luftrohrs (63) mit festen spiralförmigen Rippen versehen ist.

4. Die Windturbine (1) nach dem vorstehenden Anspruch, wobei die spiralförmigen Rippen eine Höhe von mindestens 0,05 m aufweisen.

5. Die Windturbine (1) nach einem der vorstehenden Ansprüche, wobei die Windturbine (1) modular aufgebaut ist und mindestens Folgendes umfasst:

   - eine tragende Struktur (2), die angeordnet ist, um die Module (4, 5, 6) der modularen Windturbine (1) zu bilden,
   - ein erstes Modul, das als Lufteinlassdüse (4) zum Gewährleisten der Luftstromrichtung und zum Komprimieren der Luft zum Erhöhen der Luftgeschwindigkeit geformt ist, wobei die Lufteinlassdüse (4) einen Außenring (41), einen Kegel (42) und eine vordere Luftschleife (43) umfasst,
   - ein drittes Modul, das als Luftauslassdüse (5) geformt ist, umfassend einen Außenring (51), eine Abdeckung (52) und eine hintere Luftschleife (53), wobei die Luftauslassdüse (5) konfiguriert ist, um mindestens einen Teil des Luftstroms in Richtung der Lufteinlassdüse (4) abzulenken, wobei die abgelenkten Luftströme eine Rückkopplungsschleife zum Erhöhen des Luftstroms durch Rotorblätter (62) mindestens eines zweiten Turbinenmoduls (6) bilden, und
   - mindestens ein zweites Modul (6), das zwischen dem ersten und dem dritten Modul (4, 5) angeordnet ist, wobei jedes zweite Modul (6) mindestens Folgendes umfasst:

      ◦ ein Außengehäuse (61), wobei das Außengehäuse (61) als Kegelstumpf geformt ist und der Durchmesser auf seiner Vorderseite, die der Einlassdüse (4) näher liegt, größer ist als der Durchmesser an seiner Endseite, die der Auslassdüse (5) näher liegt,
      ◦ das im Inneren des Außengehäuses (61) vorgesehene hohle Luftrohr (63), wobei das Luftrohr (63) konfiguriert ist, um einen umgekehrten Luftstrom von der Luftauslassdüse (5) in Richtung der Lufteinlassdüse (4) zu ermöglichen,
      ◦ mindestens drei Rotorblätter (62), die drehbar auf einer auf dem hohlen Luftrohr (63) montierten Halterung angebracht sind,
      ◦ eine als gekrümmte Platte geformte tragende Basis (64), die dem Außengehäuse (61) des Moduls (6) entspricht, wobei die tragende Basis (64) die Befestigung des Moduls (6) an der tragenden Struktur (2) ermöglicht,
      ◦ einen Generator (G), der angeordnet ist, um die kinetische Energie des durch die Turbine strömenden Windes in elektrische Energie umzuwandeln, wobei der Generator mit Befestigungselementen (H) an dem Außengehäuse angebracht ist.

6. Die Windturbine (1) nach Anspruch 5, wobei die Lufteinlassdüse (4), die Luftauslassdüse (5) und mindestens ein Turbinenmodul (6) an mindestens drei Punkten auf dem Außengehäuse (61) miteinander befestigt sind, vorzugsweise verschraubt, wodurch die Steifigkeit der gesamten modularen Windturbine (1) erhöht wird.

7. Die Windturbine (1) nach einem der Ansprüche 5 bis 6, wobei das Außengehäuse (61) mit fest angebrachten Rippen versehen ist.

8. Die Windturbine (1) nach dem vorstehenden Anspruch, wobei die Rippen zwischen einem Endteil des vorstehenden Außengehäuses (61) und einem Vorderteil des angrenzenden Außengehäuses (61) angeordnet sind.

9. Die Windturbine (1) nach einem der Ansprüche 5 oder 8, wobei die festen Rippen gleichmäßig entlang des gesamten Umfangs des Außengehäuses (61) verteilt sind.

10. Die Windturbine (1) nach einem der Ansprüche 5 bis 9, wobei die festen Rippen als Platten geformt sind, die senkrecht oder in einem beliebigen Winkel in Bezug auf das Außengehäuse (61) angebracht sind, um die Schaffung einer Vielzahl von Einlässen für die seitliche Luftzufuhr zu ermöglichen.

**11.** Die Windturbine (1) nach einem der vorstehenden Ansprüche, wobei der Radius der Rotorblätter (62) mindestens 0,5 m beträgt und wobei der Durchmesser des Luftrohrs (63) mindestens 0,2 m beträgt.

**12.** Die modulare Windturbine (1) nach einem der vorstehenden Ansprüche, wobei die tragende Struktur (2) ferner einen teleskopierbaren (31) oder einen starren Arm umfasst..

**13.** Die Windturbine (1) nach einem der vorstehenden Ansprüche, wobei die Turbine im Falle der Installation auf Schiffen mit einer Batteriespeichereinheit (B) oder mit einer Umspannstation in der Nähe der Windturbine (1) in dem Fall, in dem die Turbine (1) auf See und an Land als Onshore- oder Offshore-Anlage installiert ist, verbunden ist.

**14.** Ein Schiff, das mit mindestens einer, vorzugsweise mehreren, Windturbinen (1) nach einem der vorstehenden Ansprüche versehen ist.

**15.** Offshore- oder Onshore-Kraftwerk, das Folgendes umfasst:

- eine Vielzahl von modularen Windturbinen (1) nach einem der vorstehenden Ansprüche 1 bis 14.

**Revendications**

**1.** Éolienne (1) comprenant :

- une buse d'admission d'air (4) conçue pour laisser l'air entrer dans l'éolienne (1) et le flux de l'air circuler vers des pales de rotor (62),
- un tube d'air creux (63) sur lequel les pales de rotor (62) de l'éolienne (1) sont installées, ledit tube d'air creux (63) étant placé entre la buse d'admission d'air (4) et une buse d'échappement d'air (5), **caractérisés par le fait que**
- la buse d'échappement d'air (5) est conçue pour permettre la libération au moins partielle de l'air vers l'extérieur de l'éolienne (1) ainsi que le retour au moins partiel de l'air via le tube d'air creux (64) vers la buse d'admission (4).

**2.** Éolienne (1) selon la revendication 1, dans laquelle la buse d'échappement d'air (5) est pourvue d'au moins une surface conçue pour faire dévier au moins une partie du flux d'air vers le tube d'air creux (63), et/ou dans laquelle la buse d'admission d'air (4) est pourvue d'au moins une surface conçue pour faire dévier au moins une partie de l'air provenant du tube d'air creux (63) vers les pales de rotor (62).

**3.** Éolienne (1) selon l'une quelconque des revendications précédentes, dans laquelle l'intérieur du tube d'air creux (63) est pourvu de nervures hélicoïdales fixes.

**4.** Éolienne (1) selon la revendication précédente, dans laquelle les nervures hélicoïdales ont une hauteur d'au moins 0,05 m.

**5.** Éolienne (1) selon l'une quelconque des revendications précédentes, ladite éolienne (1) ayant une conception modulaire et comprenant au moins :

- une structure support (2) conçue pour soutenir les modules (4, 5, 6) composant l'éolienne modulaire (1),
- un premier module ayant la forme de la buse d'admission d'air (4), destiné à assurer la direction d'un flux d'air et à compresser l'air pour en accroître la vitesse, ladite buse d'admission d'air (4) comprenant un anneau extérieur (41), un cône (42) et une boucle d'air avant (43),
- un troisième module ayant la forme de la buse d'échappement d'air (5), comprenant un anneau extérieur (51), un capot (52) et une boucle d'air arrière (53), ladite buse d'échappement d'air (5) étant configurée de manière à ce qu'au moins une partie du flux d'air soit déviée vers la buse d'admission d'air (4), où lesdits flux d'air déviés créent une boucle de retour pour accroître le débit d'air passant dans les pales de rotor (62) d'au moins un second module d'éolienne (6), et
- au moins un second module (6) installé entre le premier et le troisième module (4, 5), chaque second module (6) comprenant au moins :

  ◦ un boîtier externe (61), ledit boîtier externe (61) ayant la forme d'un cône tronqué et le diamètre de son côté avant, plus proche de la buse d'admission (4), étant plus grand que le diamètre de son côté arrière, plus proche de la buse d'échappement (5),
  ◦ le tube d'air creux (63) présent à l'intérieur du boîtier externe (61), ledit tube d'air (63) étant configuré pour permettre un flux d'air inversé depuis la buse d'échappement d'air (5) vers la buse d'admission d'air (4),
  ◦ au moins trois pales de rotor (62) installées sur un support qui est monté de façon rotative sur le tube d'air creux (63),
  ◦ une base support (64) ayant la forme d'une plaque courbe pour correspondre au boîtier externe (61) du module (6), ladite base support (64) permettant la fixation du module (6) à la structure support (2),
  ◦ un générateur (G) conçu pour convertir l'énergie cinétique du vent passant dans l'éolienne en énergie électrique, ledit générateur étant fixé au boîtier externe par des fixations (H).

6.  Éolienne (1) selon la revendication 5, dans laquelle la buse d'admission d'air (4), la buse d'échappement d'air (5) et au moins un module d'éolienne (6) sont mutuellement fixés, de préférence vissés, sur au moins trois points du boîtier externe (61), ce qui accroît la rigidité de l'intégralité de l'éolienne modulaire (1).

7.  Éolienne (1) selon l'une quelconque des revendications 5 à 6, dans laquelle le boîtier externe (61) est pourvu de nervures installées fixes.

8.  Éolienne (1) selon la revendication précédente, où lesdites nervures sont installées entre une partie finale du boîtier externe précédent (61) et une partie frontale du boîtier externe adjacent (61).

9.  Éolienne (1) selon l'une quelconque des revendications 5 à 8, dans laquelle les nervures fixes sont réparties uniformément le long de toute la circonférence du boîtier externe (61).

10. Éolienne (1) selon l'une quelconque des revendications 5 à 9, dans laquelle les nervures fixes ont la forme de plaques installées perpendiculairement ou à tout autre angle par rapport au boîtier externe (61) pour permettre la création d'entrées multiples pour l'admission d'air latérale.

11. Éolienne (1) selon l'une quelconque des revendications précédentes, dans laquelle le rayon des pales de rotor (62) est d'au moins 0,5 m, et dans laquelle le diamètre du tube d'air (63) est d'au moins 0,2 m.

12. Éolienne modulaire (1) selon l'une quelconque des revendications précédentes, dans laquelle la structure support (2) comprend également un bras télescopique (31) ou rigide.

13. Éolienne (1) selon l'une quelconque des revendications précédentes, où l'éolienne est raccordée à un accumulateur (B) en cas d'installation sur des navires ou à une station de transformation proche de l'éolienne (1) au cas où l'éolienne (1) serait installée en mer et sur terre, comme des usines côtières ou off-shore.

14. Navire pourvu d'au moins une, de préférence plusieurs éolienne(s) (1) selon l'une quelconque des revendications précédentes.

15. Une centrale électrique off-shore ou côtière, comprenant :

    - de multiples éoliennes modulaires (1) selon l'une quelconque des revendications 1 à 14.

1

62

42

31

2

3

Figure 1

5

6

6

4

42

3

2

Figure 2

Figure 3

Figure 4

Figure 5a

Figure 5b

Figure 5c

Figure 6

Figure 7

Figure 8

Figure 9a

Figure 9b

Figure 9c

Figure 9d

Figure 10

**EP 4 545 782 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3472462 A
- US 2022065225 A
- CA 3104301
- WO 2023057025 A
- ES 2254037
- WO 2018029401 A
- NL 2015290 B1
- DE 102011016141 B4